# DEMANDE DE BREVET EUROPEEN

(11) **EP 1 902 686 A1**
(43) Date de publication de la demande: **26.03.2008**
(21) Numéro de dépôt: 06121072.0
(22) Date de dépôt: 21.09.2006
(51) Int. Cl.: A61C 13/265

(54) **Procede pour fixer provisoirement une prothese dentaire**

(71) Demandeur: Hader SA, 2300 La Chaux-de-Fonds (CH)
(72) Inventeur: Valoppi, Luigino, 2300, La Chaux-de-Fonds (CH)
(74) Mandataire: GLN

(57) **Abrégé**

La présente invention concerne un procédé pour fixer provisoirement une prothèse dentaire en bouche.

Selon ce procédé, on utilise un dispositif de fixation (A) monté provisoirement sur une dent restante, ledit dispositif de fixation (A) comprenant un élément de fixation (B) destiné à être fixé sur la dent restante et un élément de support (C) destiné à coopérer avec ledit élément de fixation (B) et autour duquel est formée la prothèse dentaire provisoire, et on fixe provisoirement ledit élément de fixation (B) à ladite dent restante par collage temporaire.

## Description

### Domaine technique

La présente invention concerne un procédé pour fixer provisoirement une prothèse dentaire en bouche au moyen d'un dispositif de fixation monté provisoirement sur une dent restante. On emploie le terme de dent restante par opposition à une dent extraite qu'il s'agit de remplacer.

Le dispositif de fixation comprend un élément de fixation destiné à être fixé sur la dent restante et un élément de support destiné à coopérer avec l'élément de fixation et autour duquel est formée la prothèse dentaire.

Lorsqu'une dent doit être extraite, sa substitution peut nécessiter la pose d'un implant sur lequel est ensuite fixée une dent artificielle. Il est cependant nécessaire d'attendre une certaine période pour que la cicatrisation et l'ostéointrégration puissent se faire avant que l'implant puisse être chargé pour remplacer la dent extraite.

Toutefois, il est fort gênant pour le patient de laisser l'implant en l'état pendant cette période d'attente. En effet, au niveau psychologique, il est parfois choquant de devoir supporter un espace vide important au niveau de sa dentition. Cela perturbe fortement le patient dont l'attention est focalisée par les sensations perçues au niveau de sa bouche. En outre, le vide étendu créé dans la mâchoire peut entraîner un affaissement des muscles de la joue, ce qui conduit éventuellement à ce que le patient se morde fréquemment une fois que les dents artificielles sont en place. De plus, il est souhaitable de protéger l'implant des pressions engendrées par la mastication pendant cette période, afin de ne pas perturber la cicatrisation.

L'invention s'applique tout particulièrement aux prothèses dentaires provisoires, qui se présentent sous la forme d'un pont provisoire, destiné à être mis en place pendant cette période d'attente, entre deux dents restantes situées de part et d'autre d'une zone de la mâchoire dont au moins une dent a été extraite.

### Etat de la technique

Les prothèses provisoires habituellement utilisés mettent en oeuvre des crochets et/ou des faux palais. Le résultat esthétique et le confort du patient ne sont toutefois pas très satisfaisants.

On connaît également des ponts dentaires provisoires, tels que ceux décrits dans le brevet US 1, 705, 504 comprenant un élément de fixation sur une dent restante et un élément de support coopérant avec ledit élément de fixation et autour duquel est formée la prothèse dentaire provisoire. Toutefois, le procédé pour fixer ce pont provisoire nécessite de pratiquer des aménagements non réversibles dans les dents restantes afin de monter sur ces dernières les éléments de fixation. Lorsque les dents restantes sont des dents saines et vivantes, le montage d'un pont provisoire signifie que ces deux dents saines sont mutilées pour remplacer au moins une dent extraite, ce qui n'est pas satisfaisant et pose problème au niveau du respect de l'état bucco-dentaire du patient.

Les dispositifs de fixation de prothèse dentaire provisoire que connaît la demanderesse, utilisent soit des procédés de fixation qui endommagent plus ou moins, et de manière irréversible, les dents saines servant de dents supports de la prothèse provisoire, soit des faux-palais ou des crochets insatisfaisants pour le patient.

Le but de la présente invention est donc de résoudre ce problème, en proposant un procédé qui permet de préserver l'état bucco-dentaire du patient, en gênant le moins possible le patient.

### Divulgation de l'invention

A cet effet, et conformément à la présente invention, il est proposé un procédé pour fixer provisoirement une prothèse dentaire en bouche au moyen d'un dispositif de fixation monté provisoirement sur une dent restante, ledit dispositif de fixation comprenant un élément de fixation destiné à être fixé sur la dent restante et un élément de support destiné à coopérer avec ledit élément de fixation et autour duquel est formée la prothèse dentaire provisoire. Selon l'invention, on fixe provisoirement ledit élément de fixation à ladite dent restante par collage temporaire, sans modifier l'état initial de la dent restante.

On entend par collage temporaire un collage qui reste en place tant que le dentiste ne l'élimine pas volontairement par des moyens appropriés, si l'on respecte bien entendu sa durée d'utilisation.

Lorsque la prothèse dentaire provisoire n'est plus nécessaire, il suffit alors de décoller l'élément de fixation pour retrouver la dent restante dans son état initial.

### Brève description des dessins

D'autres avantages et caractéristiques ressortiront mieux de la description qui va suivre d'un procédé conforme à l'invention, donné à titre d'exemple non limitatif, en référence aux dessins annexés sur lesquels :
- la figure 1 montre une vue en coupe d'un dispositif de fixation utilisé dans la présente invention,
- la figure 2 montre une vue de dessus du dispositif de fixation représenté sur la figure 1
- la figure 3 montreune vue de face d'un élément de fixation utilisé dans la présente invention,
- la figure 4 montreune vue de côté de l'élément de fixation représenté sur la figure 1, et
- la figure 5 montreune vue en coupe de l'élément de support utilisé dans la présente invention.

### Mode(s) de réalisation de l'invention

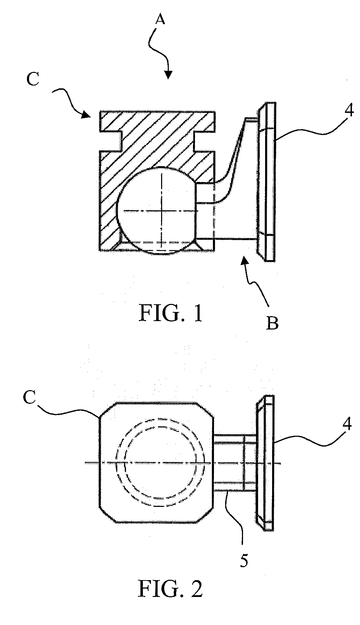

En référence aux figures 1 et 2, le dispositif de fixation A utilisé dans la présente invention comprend un élément de fixation B destiné à être fixé sur une dent restante et un élément de support C autour duquel est formée la prothèse dentaire provisoire, et qui est destiné à coopérer avec ledit élément de fixation B.

Le dispositif de fixation A est utilisé pour fixer provisoirement une prothèse dentaire à une dent restante. La prothèse dentaire provisoire se présente par exemple sous la forme d'un pont dentaire provisoire mis en place entre deux dents restantes pour remplacer temporairement une ou plusieurs dents extraites. On utilise alors deux dispositifs de fixation A pour fixer provisoirement le pont dentaire sur chacune des deux dents restantes. Ces dents restantes peuvent être des dents saines et vivantes, ou éventuellement dévitalisées.

Conformément au procédé selon la présente invention, l'élément de fixation B est fixé à la dent restante par collage temporaire. L'homme du métier, c'est-à-dire le médecin dentiste, choisira les adhésifs usuels appropriés au collage temporaire utilisés par exemple dans le domaine de l'orthodontie.

De manière inattendue, le collage temporaire des éléments de fixation selon le procédé de l'invention, qui permet de préserver l'état des dents restantes, est compatible avec les contraintes importantes induites sur lesdits éléments de fixation lorsque le patient mâche sur le pont dentaire provisoire.

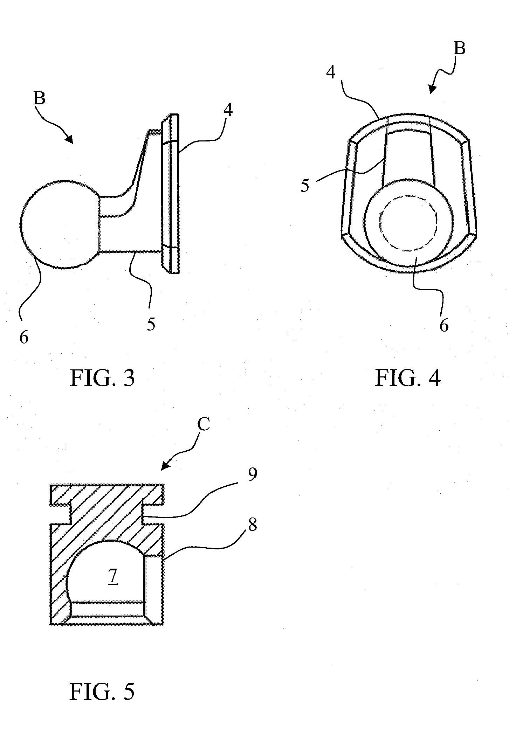

En référence plus particulièrement aux figures 3 et 4, l'élément de fixation B comprend une surface d'ancrage 4 destinée à être collée temporairement sur la dent restante, se présentant sous la forme d'une plaque, et d'où saillit un bras 5 terminé par une tête sphérique 6 coopérant avec l'élément de support C. Le bras 5 présente une forme conique biseautée renforçant la tenue du dispositif de fixation A. L'élément de fixation B est généralement réalisé dans un matériau biocompatible, tel que le titane.

En référence plus particulièrement à la figure 5, l'élément de support C comprend un évidement 7 débouchant sur la face qui se trouvera en regard de l'élément de fixation B par une ouverture latérale 8 constituant un passage pour le bras 5 de l'élément de fixation B.

L'évidement 7 est de forme complémentaire à la tête sphérique 6 de l'élément de fixation B, ladite tête 6 s'encastrant dans ledit évidement 7 lorsque l'on assemble l'élément de support C à l'élément de fixation B. De manière avantageuse, l'évidement 7 débouche également sur le fond de l'élément de support C de sorte que l'on assemble l'élément de support C à l'élément de fixation B de manière amovible. L'élément de support C peut alors être séparé de l'élément de fixation B par simple désengagement de la tête 6 de son logement constitué par l'évidement 7.

De préférence, l'élément de support C est de forme parallélépipédique et est incorporé de façon connue à la résine de la prothèse dentaire. Il comprend à son sommet une rainure périphérique 9 permettant son maintien dans la prothèse dentaire. De préférence, l'élément de support C est réalisé en matières synthétiques présentant une certaine élasticité pour faciliter l'emboîtement de l'élément de support C sur la tête sphérique 6 de l'élément de fixation B.

Le procédé selon l'invention est particulièrement simple à mettre en oeuvre puisqu'il ne nécessite aucun aménagement des dents restantes utilisées comme dents supports. Il ne nécessite pas non plus de crochets ou de fils pour améliorer sa tenue. Il permet donc d'obtenir une bouche à l'aspect esthétique amélioré et offre un meilleur confort.

En l'absence d'aménagement particulier, le pont dentaire provisoire est facilement accessible et peut être manipulé aisément par le patient ou par le dentiste pour le retirer, vérifier la cicatrisation et le remettre en place. Les soins d'entretien hygiénique sont ainsi grandement facilités.

De plus, grâce au procédé selon l'invention, il suffit, à la fin de la période d'utilisation de la prothèse dentaire provisoire, d'enlever les éléments de fixation en les décollant par des moyens appropriés et de remettre les dents restantes dans leur état initial en éliminant les restes d'adhésif. L'état bucco-dentaire du patient est donc préservé, aucune modification de ses dents saines n'ayant été nécessaire pour fixer provisoirement la prothèse dentaire.

Il est bien évident que l'exemple que l'on vient de donner est particulièrement adapté à la fixation d'un pont dentaire provisoire entre deux dents, mais n'est qu'une illustration particulière en aucun cas limitative quant aux domaines d'application de l'invention.

Le procédé peut notamment être utilisé pour fixer provisoirement une prothèse sur une seule dent restante. Cette prothèse provisoire peut être aussi une première prothèse qui a été modifiée pour incorporer le dispositif de fixation.

Par ailleurs, le terme de dent restante peut notamment définir une prothèse fixe posée préalablement.

Dans un tel cas, le problème n'est pas d'obtenir une situation parfaite de la situation bucco-dentaire du patient, mais de ne pas endommager la prothèse fixe existante et qui restera en place à la fin du traitement.

## Revendications

1. Procédé pour fixer provisoirement une prothèse dentaire en bouche au moyen d'un dispositif de fixation (A) monté provisoirement sur une dent restante, ledit dispositif de fixation (A) comprenant un élément de fixation (B) destiné à être fixé sur la dent restante et un élément de support (C) destiné à coopérer avec ledit élément de fixation (B) et autour duquel est formée la prothèse dentaire provisoire, **caractérisé en ce que** l'on fixe provisoirement ledit élément de fixation (B) à ladite dent restante par collage temporaire.

2. Procédé selon la revendication 1, **caractérisé en ce que** l'élément de fixation (B) comprend un organe d'ancrage (4) destiné à être collé temporairement sur la dent restante.

3. Procédé selon la revendication précédente, **caractérisé en ce qu'**un bras (5) terminé par une tête (6) coopérant avec l'élément de support (C) est disposé en saillie sur ledit organe d'ancrage (4).

4. Procédé selon la revendication précédente, **caractérisé en ce que** l'élément de support (C) comprend un évidement (7) débouchant sur sa face en regard de l'élément de fixation (B), de forme complémentaire à la tête (6) de l'élément de fixation (B), et dans lequel s'encastre ladite tête (6) pour assembler l'élément de support (C) à l'élément de fixation (B).

5. Procédé selon la revendication précédente, **caractérisé en ce que** ledit évidement (7) de l'élément de support (C) débouche sur son fond de façon à assembler l'élément de support (C) à l'élément de fixation (B) de manière amovible.

6. Procédé selon l'une quelconque des revendications précédentes, **caractérisé en ce que** l'élément de support (C) est de forme parallélépipédique et est incorporé à la prothèse dentaire.

7. Procédé selon la revendication précédente, **caractérisé en ce que** l'élément de support (C) comprend à son sommet une rainure périphérique (9) assurant avec stabilité son maintien dans la prothèse dentaire.

8. Procédé selon l'une quelconque des revendications précédentes, **caractérisé en ce que** l'élément de fixation (B) est réalisé dans un matériau métallique et l'élément de support (C) est réalisé en matières synthétiques.
